# EUROPÄISCHE PATENTANMELDUNG

(11) **EP 0 543 164 A1**
(43) Veröffentlichungstag der Anmeldung: **26.05.1993**
(21) Anmeldenummer: 92117985.9
(22) Anmeldetag: 21.10.1992
(51) Int. Cl.: A01D 89/00, A01D 41/10

(54) **Aufnahmevorrichtung für Halmgut**

(30) Priorität: 19.11.1991 DE 4138013
(71) Anmelder: SAME S.p.A., I-24047 Treviglio (Bergamo) (IT)
(72) Erfinder: von Allwörden, Wilhelm, Dipl.-Ing., W-7908 Oberstotzingen (DE)
(74) Vertreter: Nau, Walter, Dipl.-Ing.

(57) **Zusammenfassung**

Die Erfindung bezieht sich auf eine Vorrichtung zur Aufnahme von gemähtem Halmgut.

Der Erfindung liegt die Aufgabe zugrunde, eine effektive, verlustarme und wirkungsvolle Aufnahmevorrichtung darzustellen.

Die Aufgabe wird dadurch gelöst, daß die Vorrichtung mehrere getrennte Aufnahmeorgane 6 umfaßt und das Halmgut von einem Gebläse 9 weiter gefördert wird.

## Beschreibung

Die Erfindung betrifft eine Vorrichtung zur Aufnahme von gemähtem Halmgut insbesondere nach dem Oberbegriff des Anspruchs 1.

Zur Ernte von Halmgut wie beispielsweise Gras, Luzerne oder Klee, wird dieses üblicherweise zunächst geschnitten, mehrfach gewendet, bevor es angewelkt oder getrocknet von einer Erntemaschine aufgenommen und gehäckselt oder gepreßt einem angehängtem Sammelbehälter zugeführt wird.

Zur Silage von Halmgut ist es üblich das gemähte und in einem Schwad abgelegte Halmgut nach einer Anwelkzeit in einem weiteren Arbeitsgang durch einen Feldhäcksler zu bergen. Der Feldhäcksler ist dazu mit einer Pick-up versehen zur Aufnahme des Halmgutes, das anschließend gehäckselt und einem Sammelbehälter zugeführt wird.

Aus der EP-OS 0 205 206 gehen weiter der Aufbau und die Wirkungsweise einer Maschine hervor, mit der gemähtes Halmgut aufbereitet wird, damit es leicht anwelkt oder trocknet und trotzdem seine Faserstruktur behält. Dieses gezielte Aufbereiten schließt das Formen des Fasergutes zu einer Halmgutmatte ein, die nach dem Aufbereitungsvorgang auf dem Boden abgelegt wird, bevor sie nach einer kurzen Trocknungsphase in einem weiteren Arbeitsvorgang eingesammelt wird.

Der Erfindung liegt die Aufgabe zugrunde, eine Einrichtung zu schaffen, mit der eine schnelle, verlustarme und wirkungsvolle Bergung von Halmgutmatten erzielbar ist.

Die Aufgabe wird gelöst durch die kennzeichnenden Merkmale des Anspruchs 1.

Erfindungsgemäß sieht die Vorrichtung mehrere Aufnahmeorgane vor, mit der gleichzeitig mehrere in Schwaden abgelegte Halmgutmatten aufgenommen werden wodurch die Leistungsfähigkeit der Maschine deutlich erhöht werden kann.

Die erfindungsgemäße Vorrichtung umfaßt dabei ein Gebläse, das als Wurforgan dient und dem die Halmgutmatten aller Aufnahmeorgane zugeführt werden zur Weiterleitung in einen der Vorrichtung nachgeschalteten Sammelbehälter.

In einer Ausgestaltung der Erfindung ist vorgesehen, daß mehrere parallel nebeneinander angeordnete und angetriebene Aufnahmeorgane vorgesehen sind. Vorteilhaft ist dabei die Anordnung der Aufnahmeorgane so ausgerichtet, daß diese jeweils einen Halmgutstrang aufnehmen.

Zur Darstellung eines einfachen Straßentransports der erfindungsgemäßen Vorrichtung sind die endseitig an der Vorrichtung angeordneten Aufnahmeorgane schwenkbar ausgeführt. Die beispielsweise für die Straßenfahrt vertikal verschwenkbaren äußeren Aufnahmeorgane sind dabei vorzugsweise hydraulisch vom Fahrersitz einer selbstfahrenden Maschine beziehungsweise im Falle einer angehängten Maschine vom Fahrersitz des Zugfahrzugs fernbedienbar von der Transport- in die Arbeitsstellung und umgekehrt schwenkbar.

Der schwenkbare Bereich der Vorrichtung schließt dabei alle Bauteile ein, wie beispielsweise eine Pick-up als Aufnahmeorgan eine Schnecke sowie einen Teilbereich des Aufnahmetisches.

Vorteilhaft stellt sich in der verschwenkten Stellung der erfindungsgemäßen Vorrichtung eine Gesamtbreite ein, die eine übliche Fahrzeugspurbreite nicht überragt und so ein mit dieser Vorrichtung versehenes Fahrzeug für die Benutzung öffentlicher Straßen zugelassen wird. Der Vorrichtungsaufbau sieht weiter einen Antrieb des Aufnahmeorgans vor, der von der Schnecke erfolgt, der folglich unterbrochen wird, sobald die äußeren Aufnahmeorgane verschwenkt werden. Vorteilhaft ist die Schnecke in dem Gelenkbereich zum Beispiel mit einer Klauenkupplung versehen, die beim Umstellen von der Transport- in die Arbeitsstellung selber einrastet.

Zur Erreichung einer großen Arbeitsbreite und einer schnellen Umstellung von der Arbeits- in die Transportstellung sieht die Erfindung vorteilhaft drei Aufnahmeorgane vor, wobei jeweils zwischen dem mittleren und dem außen plazierten Aufnahmeorgan eine Gelenkverbindung zum Verschwenken vorgesehen ist. In einer vorteilhaften Weiterbildung der Erfindung ist das Aufnahmeorgan mit einer Pick-up versehen, die anstelle der üblicherweise verwendeten Federzinken Gummiaufnehmer aufweist, die eine schonende verlustarme Aufnahme der Halmgutmatte sicherstellen.

Die Forderung nach einer schonenden Aufnahme weiter stützend ist der Durchmesser der trommelförmig ausgebildeten Pick-up bewußt klein ausgelegt, um den Förderweg des Halmguts durch die Pick-up zu verkleinern um Bröckelverluste zu verhindern. Vorteilhaft hat sich dabei ein Durchmesser der Pick-up erwiesen, der ungefähr dem 10-fachen Wert der Halmgutmatte entspricht.

Zur Kostenoptimierung ist die erfindungsgemäße Vorrichtung auch als ein Vorsatzgerät für verschiedene Land- bzw. Erntemaschinen einsetzbar. Beispielsweise kann die erfindungsgemäße Vorrichtung mit einem Feldhäcksler gekoppelt werden, dessen spezielle Aufnahmeorgane ersetzt werden durch die erfindungsgemäßen Aufnahmeorgane und als Wurforgan, das Gebläse des Häckslers dient nach Entfernen der speziellen Häckslermesser. Die erfindungsgemäße Vorrichtung ist dagegen ebenfalls mit einem in der Landwirtschaft überlicherweise eingesetzten Ladewagen kombinierbar, wodurch deren Einsatzfähigkeit vorteilhaft erweitert werden kann.

Weitere Merkmale der Erfindung ergeben sich aus der nachfolgenden Beschreibung und den Zeichnungen, in denen ein Ausführungsbeispiel der Erfindung schematisch dargestellt ist.

Es zeigen:
- Fig.1:: in einer Draufsicht die erfindungsgemäße Aufnahmevorrichtung;
- Fig.2:: die Seitenansicht der in Fig.1 dargestellten Aufnahmevorrichtung.

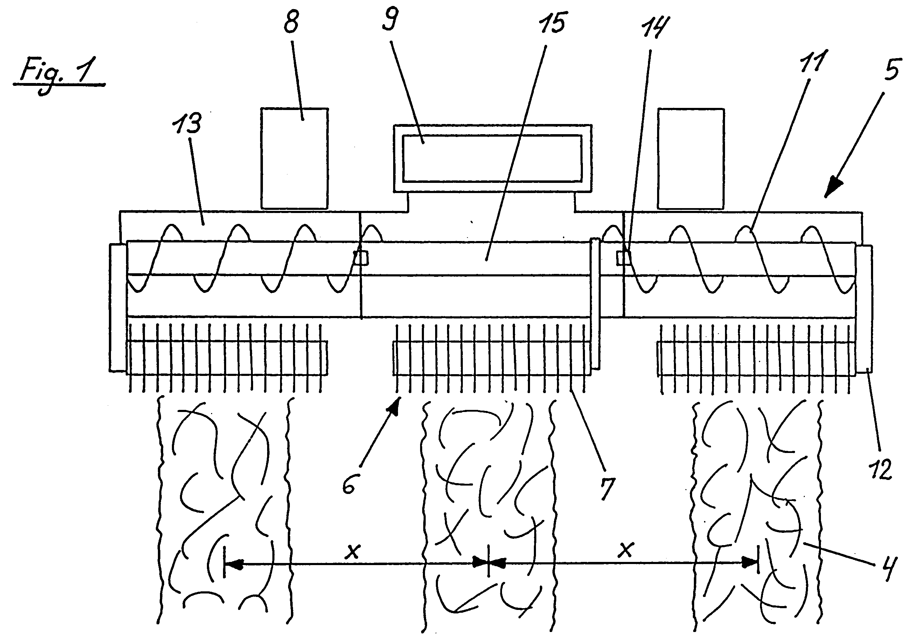

Die in Fig.1 dargestellte Vorrichtung 5 zeigt alle erfindungswesentlichen Bauteile, das Aufnahmeorgan 6, als Zuführorgang die Schnecke 11 sowie das Gebläse 9 als Wurforgan. Die in Schwaden in einem Abstand x zueinander abgelegten Halmgutmatten 4 werden von je einer Pick-up 7, die als Aufnahmeorgan 6 dienen, aufgenommen und in den nachgeordneten Aufnahmetisch 13 gefördert. Den beiden äußeren Pick-up's ist je eine Schnecke 11 nachgeordnet, mit der die Bestandteile der Halmgutmatte in den mittleren Bereich vom Aufnahmetisch 13 gefördert wird, bevor das Erntegut zum Gebläse 9 gelangt. Die Schnecke 11 und die Pick-up 7 besitzen einen gemeinsamen Antrieb 12. Zur vereinfachten Umstellung der Vorrichtung 5 von der in Fig.1 dargestellten Arbeitsstellung und in Schwaden abgelegten in eine Transportstellung dient je ein Gelenk 14, das beidseitig der mittleren Pick-up 7 im Bereich der Welle 15 angeordnet ist. Zur Bodenanpassung der Vorrichtung 5 dienen die Räder 8. Die in Fig.1 dargestellten und in Schwaden abgelegten einen Mittenabstand x aufweisenden Halmgutmatten 4 werden von je einer Pick-up 7 aufgenommen. Das Maß x entspricht der Schnittbreite der Maschine, mit der das Halmgut aufbereitet und als Halmgutmatte 4 abgelegt wird. Die Längserstreckung jeder Pick-up 7 ist dabei jeweils deutlich über der Breite der Halmgutmatte 4 ausgelegt, um so auch bei einer evtl. Nichteinhaltung der üblichen Schnittbreite der Aufbereitungsmaschine den einzelnen Halmgutstrang sicher aufnehmen zu können.

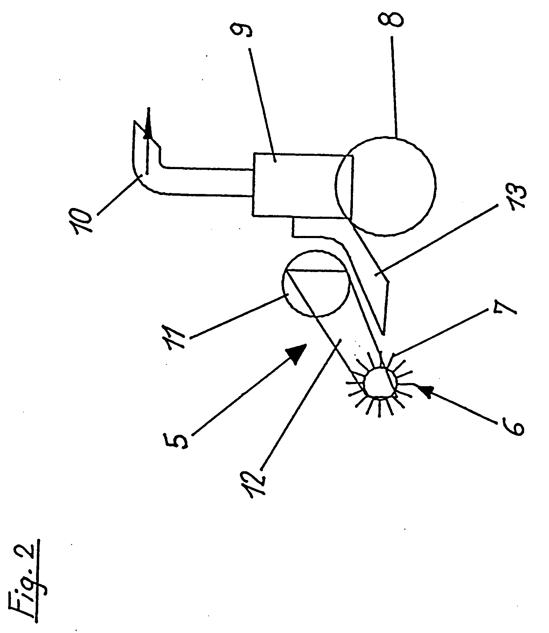

Die Fig.2 zeigt ebenfalls sinnbildlich die Zuordnung der einzelnen Organe, das heißt Bauteile in der Seitenansicht. Die in Fig.2 nicht dargestellte Halmgutmatte 4 wird aufgenommen und gelangt in den Bereich vom Aufnahmetisch 13, der auch kleine von der Halmgutmatte 4 beim Aufnehmen abgelöste Bestandteile aufnimmt. Die versetzt oberhalb der Pick-up 7 angeordnete Schnecke 11 dient, wie aus Fig.1 ersichtlich, im äußeren Bereich vom Aufnahmetisch 13 zur Förderung des Halmguts in die Mittenzone bevor dieses in das Gebläse 9 gelangt. Das Gebläse 9 fördert die Bestandteile der Halmgutmatte durch den Auswurfkanal 10 in einen in Fig.2 nicht dargestellten nachgeordneten Sammelbehälter.

## Patentansprüche

1. Vorrichtung zur Aufnahme von gemähtem und in einem Schwad abgelegten Halmgut, insbesondere Grasmatten, wobei die Vorrichtung als eine Erntemaschine ausgeführt ist, die im wesentlichen zumindest ein Aufnahmeorgan versehen mit einer quer zur Fahrtrichtung der Erntemaschine angebrachten rotierenden Trommel aufweist und weiter mit einem Zuführorgan und einem Förderorgan versehen ist,
dadurch gekennzeichnet, daß die Vorrichtung (5) mehrere Aufnahmeorgane (6) umfaßt zur gleichzeitigen Aufnahme mehrerer Halmgutschwaden.

2. Vorrichtung nach Anspruch 1,
dadurch gekennzeichnet, daß als Förderorgan ein Gebläse (9) eingesetzt ist.

3. Vorrichtung nach Anspruch 1,
dadurch gekennzeichnet, daß parallel zueinander angeordnete und angetriebene Aufnahmeorgane (6) vorgesehen sind.

4. Vorrichtung nach einem der vorhergehenden Ansprüche,
dadurch gekennzeichnet, daß die jeweils endseitig an der Vorrichtung (5) angeordneten Aufnahmeorgane (6) einschließlich einer Schnecke (11) und Teilbereichen eines Aufnahmetisches (13) schwenkbar ausgeführt sind.

5. Vorrichtung nach Anspruch 4,
dadurch gekennzeichnet, daß die Breite der Vorrichtung (5) bei endseitig verschwenkten Aufnhameorganen (6) eine Fahrzugspurbreite nicht überragt.

6. Vorrichtung nach Anspruch 4 oder Anspruch 5,
dadurch gekennzeichnet, daß der Antrieb der endseitigen Aufnahmeorgane (6) über die Schnecke (11) erfolgt.

7. Vorrichtung nach einem der vorhergehenden Ansprüche,
dadurch gekennzeichnet, daß als Aufnahmeorgan (6) eine Pick-up (7) eingesetzt ist, die Gummiaufnehmer umfaßt.

8. Vorrichtung nach einem der vorhergehenden Ansprüche,
dadurch gekennzeichnet, daß der Durchmesser der Pick-up (7) dem mehrfachen Wert der Grasmattendicke entspricht.

9. Vorrichtung nach einem der vorhergehenden Ansprüche,
dadurch gekennzeichnet, daß die Vorrichtung (5) als Vorsatzgerät für verschiedene Land- bzw. Erntemaschinen ausgelegt ist.

10. Vorrichtung nach Anspruch 9,
dadurch gekennzeichnet, daß die Vorrichtung (5) mit einem Feldhäcksler koppelbar ist, dessen Häckselmesser entfernt sind.

11. Vorrichtung nach Anspruch 10,
dadurch gekennzeichnet, daß die Vorrichtung (5) an einem Ladewagen einsetzbar ist.
